# EUROPÄISCHE PATENTSCHRIFT

(11) **EP 0 827 874 B1**
(45) Veröffentlichungstag und Bekanntmachung des Hinweises auf die Patenterteilung: **05.11.2003**
(21) Anmeldenummer: 97113284.0
(22) Anmeldetag: 01.08.1997
(51) Int. Cl.: B60R 21/09

(54) **Anordnung zur Lagerung eines Pedals**
Arrangement for supporting a pedal
Agencement pour le support d'une pédale

(30) Priorität: 07.08.1996 DE 19631868
(43) Veröffentlichungstag der Anmeldung: 11.03.1998
(73) Patentinhaber: ADAM OPEL AG, 65423 Rüsselsheim (DE)
(72) Erfinder: Brandel, Klaus, 65205 Wiesbaden (DE); Hubbert, Heinz-Jürgen, Dipl.-Ing., 65428 Rüsselsheim (DE)

(56) Entgegenhaltungen:
- DE-A- 4 344 386
- FR-A- 2 739 077
- FR-A- 2 740 882

## Beschreibung

Die Erfindung betrifft eine Anordnung zur Lagerung eines Pedals mittels eines Lagerbocks in einem Kraftfahrzeug, der aus zwei Längsstreben mit je einer Lagerstelle für eine Pedalachse besteht, die zwischen den Längsstreben drehbar gelagert angeordnet ist, wobei diese an ihren einen Enden jeweils einen Fußpunkt zur Befestigung an der Innenwand einer Spritzwand des Fahrzeuges und an ihren anderen, freien Enden jeweils eine Abstützung gegenüber einem Widerlager der Karosserie aufweisen, auf das sich die Spritzwand im Falle einer Frontalkollision des Fahrzeuges zubewegt, wobei die Lagerstellen nach außen bewegt werden.

Eine Anordnung der genannten Art ist aus der DE 43 44 386 A1 bekannt. Bei der dort vorgeschlagenen Anordnung sind die freien Enden der Längsstreben miteinander verbunden und an einem geeigneten Widerlager der Karosserie befestigt, so daß sie bei einer Frontal- oder Offsetkollision im Bereich der Pedalachslagerung seitlich ausknicken. Dies hat zur Folge, daß die Lagerstummel, die an den Innenseiten der Längsstreben angeordnet sind, aus der hohl ausgebildeten Pedalachse herausgezogen werden. Das aus seiner Lagerung gelöste Pedal kann nicht weiter in den Fußraum gedrückt werden und Verletzungen an den unteren Extremitäten des Fahrers hervorrufen.

Um solche Verletzungen zu vermeiden, wurden auch schon andere Vorschläge unterbreitet. So wird in der FR 27 06 399 A1 vorgeschlagen, die Befestigung der Betätigungsstange eines Bremsdruckgebers am Bremspedalhebel im Falle einer Kollision mittels eines pyrotechnischen Treibsatzes zu lösen. Diese Anordnung hat allerdings den Nachteil, daß bei einer Fehlfunktion (Auslösung des Treibsatzes, obwohl keine Kollision vorliegt) das Fahrzeug nicht mehr gebremst werden kann.

In der DE 37 41 881 A1 wird vorgeschlagen, die Befestigung des Lagerbocks an der Spritzwand mittels aufwendiger Halterungen vorzunehmen, die sich bei einer Kollision über Seilzüge und Hydrauliksysteme selbsttätig lösen.

In der DE 43 05 290 A1 wird vorgeschlagen, den Lagerbock aus zwei Teilen herzustellen, die gelenkig miteinander verbunden und zwischen der Spritzwand und einem Widerlager der Karosserie eingespannt sind. Im Falle einer Kollision, bei der sich die Spritzwand auf das Widerlager zubewegt, knickt der Lagerbock an der Verbindungsstelle nach oben aus, so daß das Pedal nach vorn oben aus dem Fußraum herausgezogen wird.

Es hat sich herausgestellt, daß die gattungsgemäße Anordnung gemäß der DE 43 44 386 A1 von allen genannten Vorschlägen am besten zu realisieren ist und sich mit genügend hoher Wahrscheinlichkeit der gewünschte Effekt bei einer Kollision einstellt. Die beiden Streben müssen allerdings sorgfältig gefertigt werden, insbesondere müssen die vorgesehenen Sollknickstellen vor und hinter den Lagerstellen der Pedalachse hinreichend genau herausgearbeitet werden. Außerdem müssen die zusammengeführten Enden der Längsstreben am Widerlager befestigt werden, was gewisse bauliche Restriktionen mit sich bringt.

Die Erfindung beruht daher auf der Aufgabe, eine Anordnung zur Lagerung eines Pedals gemäß dem Oberbegriff des Anspruchs 1 so weiterzubilden, daß bei einer Frontalkollision eine Gesundheitsgefährdung des Fahrers durch eine Verlagerung des Pedals in den Innenraum weitestgehend ausgeschlossen ist. Außerdem soll der Lagerbock möglichst einfach und doch stabil gestaltet werden, insbesondere soll die Zahl der Sollknickstellen im Lagerbock reduziert und die Gestaltungsfreiheit bezüglich seiner Anordnung im Fahrzeug erhöht werden.

Zur Lösung dieser Aufgabe wird vorgeschlagen, eine Spreizvorrichtung vorzusehen, die zwischen den freien Enden der Längsstreben bzw. deren Abstützung und dem Widerlager angeordnet ist, die im Falle einer Kollision die freien Enden der Längsstreben auseinanderdrückt.

Mit dieser Anordnung wird erreicht, daß bei einer Kollision beide Längsstreben um ihren Fußpunkt nach außen verschwenkt und damit die Lagerstummel aus der Pedalachse herausgezogen werden und diese sich vom Lagerbock löst.

Eine einfache Spreizvorrichtung besteht aus einem am Widerlager abstützbaren Keil mit zwei schräg zueinander verlaufenden Gleitflächen, an denen jeweils ein Abstützpunkt der Abstützung anlegbar ist. Bei einer Frontalkollision gleiten die Abstützpunkte an den Gleitflächen entlang und werden wegen der Schrägstellung der Gleitflächen nach außen gedrückt, so daß der Lagerbock aufgespreizt wird.

Der Keil kann sowohl am Widerlager befestigt als auch an mindestens einer der Längsstreben verschiebbar gehalten sein. Die zuletzt genannte Form der Anbringung hat den Vorteil, daß der Lagerbock und der Keil vormontiert und als Einheit ins Fahrzeug eingebaut werden können.

Vorzugsweise schließt an der Oberkante der Längsstreben jeweils ein Lappen an, der nach innen abgewinkelt ist, wobei sich die Lappen in einem kleinen Bereich überdecken und die sich überdeckenden Bereiche über eine Klemmschraube miteinander verbunden sind. Dies erhöht die Steifigkeit des Lagerbocks. Außerdem können die hinteren Ecken der Lappen die Abstützpunkte bilden. Des weiteren kann eine sich schräg nach vorn erstreckende Kante eines Lappens als Gleitschiene für einen flach ausgebildeten Keil genutzt werden. Die Führung des Flachkeils an der Gleitschiene wird dadurch realisiert, daß an Führungskanten des Flachkeils Laschen abwechselnd nach oben und unten aufgebogen sind, so daß sie einen Führungsschlitz bilden, in den die Gleitschienen eingesteckt werden. An den Laschen werden einerseits ausreichend hohe Klemmkräfte aufgebracht, um den Flachkeil sicher an den Lappen zu halten. Andererseits sind diese aber nicht so groß, um im Falle einer Kollision ein Gleiten des Flachkeils entlang den Gleitschienen der Lappen zu unterbinden.

Die Anordnung hat weiterhin den Vorteil, daß der Keil relativ flach ausgebildet sein kann, da durch seine Führung an mindestens einer der Längsstreben gewährleistet ist, daß die Abstützpunkte stets an den Gleitflächen entlanggeführt werden.

Eine andere Ausführung einer Spreizvorrichtung besteht aus einem Kniegelenkhebel, der aus zwei gelenkig miteinander verbundenen Hebeln besteht. Diese wiederum sind an den Abstützpunkten der Längsstreben derart angelenkt, daß der Kniegelenkhebel winklig nach hinten absteht. Der Kniebereich des Kniegelenkhebels liegt dem Widerlager gegenüber, so daß im Falle einer Kollision, bei der die Abstützpunkte auf das Widerlager zubewegt werden, der Kniegelenkhebel am Widerlager abgestützt wird und sich öffnet, wodurch die Abstützpunkte nach außen gedrückt werden und der Lagerbock ausgespreizt wird.

Zur Erläuterung des Erfindungsgedankens werden im folgenden die beiden vorgestellten Alternativen anhand mehrerer Figuren erläutert. Es zeigen:
- Fig. 1: eine Anordnung gemäß der ersten Alternative in einer Draufsicht im Einbauzustand;
- Fig. 2: eine Anordnung gemäß Figur 1 in einer Crashsituation;
- Fig. 3: eine perspektivische Darstellung eines Lagerbocks vor dem Zusammenbau;
- Fig. 4: eine Anordnung, bei der der Keil an den Längsstreben geführt ist;
- Fig. 5: ein Schnitt entlang der Linie V - V der Figur 4;
- Fig. 6: eine Ausführung mit einem Kniegelenkhebel.

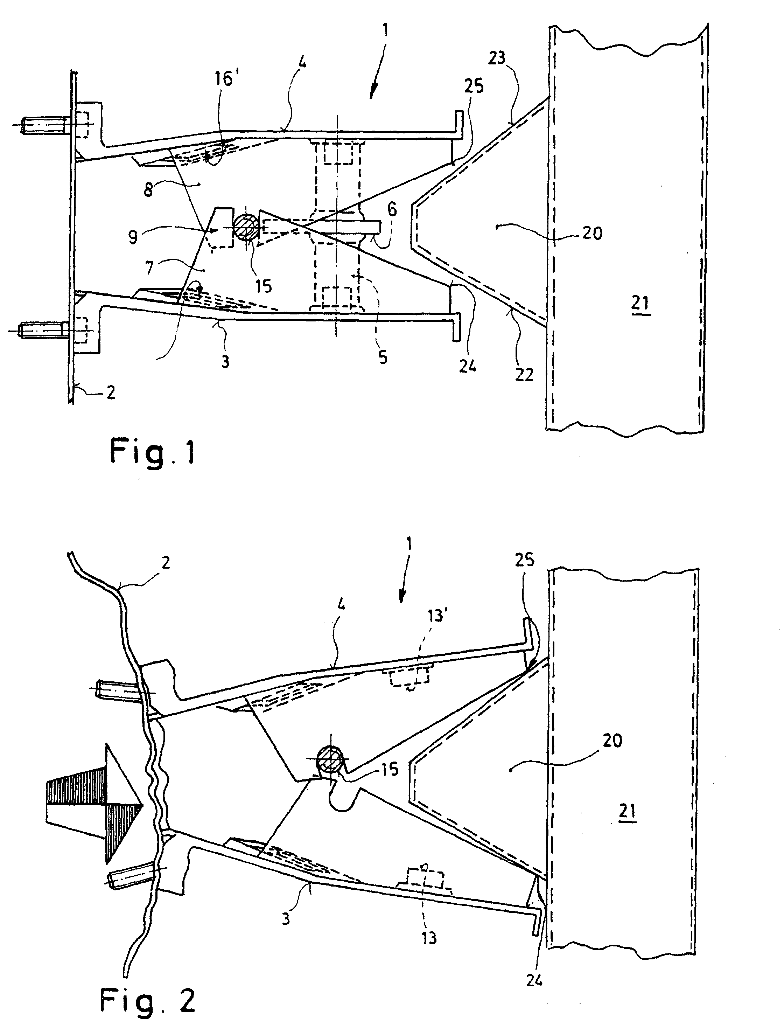

Zunächst wird auf die Figur 1 Bezug genommen.

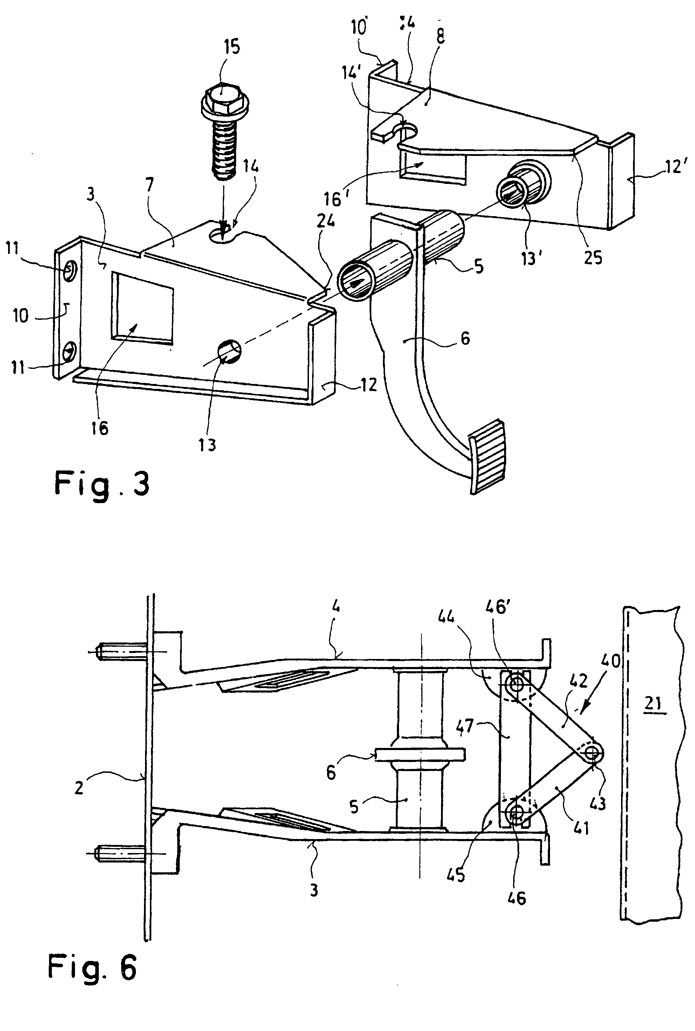

Sie zeigt einen Lagerbock 1 in Draufsicht, der mit seinem vorderen Ende an einer Spritzwand 2 befestigt ist. (Die Begriffe vorne, hinten, oben, unten beziehen sich auf die Einbaulage des Lagerbocks in einem Fahrzeug.) Der Lagerbock 1 besteht aus einer linken Längsstrebe 3 und einer rechten Längsstrebe 4, die sich in etwa senkrecht von der Spritzwand 2 weg erstrecken und in etwa parallel verlaufen. Zwischen den beiden Längsstreben 3, 4 ist eine Pedalachse 5 angeordnet, die drehfest mit einem Pedalhebel 6 (Figur 3)verbunden ist, an dessen unteren Ende eine Pedalplatte befestigt ist. Am Pedalhebel ist zwischen der Pedalplatte und der Pedalachse 5 die Betätigungsstange z. B. eines Bremskraftverstärkers angelenkt. Es handelt sich somit um die hängende Anordnung eines Pedals.

Die Oberkanten der Längsstreben 3, 4 gehen in Lappen 7, 8 über, die jeweils nach innen abgewinkelt sind und sich in einem Teilbereich 9 überlappen. Beide Lappen haben in etwa die Form eines ungleichschenkligen Dreiecks, dessen Grundlinie an die Oberkante der jeweiligen Längsstrebe anschließt und dessen langer Schenkel sich vom fahrgastseitigen, freien Ende der Längsstreben in den Überlappungsbereich erstreckt. Der Aufbau des Lagerbocks 1 geht noch deutlicher aus der Figur 3 hervor. Jede Längsstrebe 3, 4 ist plattenförmig ausgebildet und besitzt an ihrer vorderen Kante einen Flansch 10, 10', der mit zwei Befestigungsbohrungen 11 versehen ist, um die Längsstreben an der Spritzwand 2 mittels Schrauben befestigen zu können. Von der unteren und der hinteren Kante ist ein Versteifungsrahmen 12, 12' abgewinkelt, dessen Breite in etwa der Flanschbreite entspricht. An der Innenwand jeder Längsstrebe 3, 4 befindet sich ein Lagerstummel 13, 13', der aus der Seitenfläche der Längsstrebe in Form einer Hülse herausgedrückt worden ist.

Die Pedalachse 5 ist hohl ausgeführt, wobei ihr Innendurchmesser zumindest in den Endbereichen dem Außendurchmesser der herausgedrückten Lagerstummel 13, 13' entspricht. Zur Lagerung der Pedalachse 5 wird diese einfach auf die ausgedrückten Lagerstummel aufgeschoben.

Die beiden Lappen 7, 8 weisen in ihrem Überlappungsbereich jeweils randoffene Schlitze 14, 14' auf, deren offene Seiten einander zugewandt sind. Wenn die Lappen übereinanderliegen, bilden die beiden Schlitze einen geschlossenen Durchgang, in dem eine Klemmschraube 15 eingeschraubt werden kann. Diese Befestigung reicht aus, um die beiden Lappen und damit die beiden Streben 3, 4 miteinander zu verbinden und dem Lagerbock eine gewisse Steifigkeit zu geben. Außerdem wird sichergestellt, daß die beiden Streben nur im Kollisionsfall auseinander bewegt werden können.

Beide Streben können mit Öffnungen 16, 16' versehen werden, deren Ränder nach innen ausgedrückt sind, um die Streben verwindungssteif zu machen.

Da die Pedalachse 5 lediglich auf die Lagerhülsen aufgesteckt ist, kann die Lagerung aufgehoben werden, wenn die Längsstreben 3, 4 auseinandergedrückt werden. Dies geschieht mit Hilfe einer Spreizvorrichtung, die gemäß den Figuren 1, 2; 4, 5 durch einen Keil 20, 30 dargestellt ist.

Dieser Keil besitzt in etwa eine Dreiecksform, wobei die Seite, die die Grundkante des Dreiecks bildet, beispielsweise an einem Lenkungsquerträger 21 befestigt oder einstückig mit ihm ausgebildet ist. Die Seiten des Keils 20, die die Schenkel des Dreiecks bilden, sind als Gleitflächen 22, 23 ausgebildet, an denen Abstützpunkte 24, 25 in Form von Ecken der Lappen 7, 8 entlanggleiten können. Der Keil weist eine gewisse Dicke auf, so daß auch seine Gleitflächen eine entsprechende Höhenausdehnung besitzen. Damit soll vermieden werden, daß die Lappen 7, 8 bei ihrer Bewegung entlang den Gleitflächen 22, 23 über oder unter den Keil 20 rutschen.

Anhand der Figur 2 soll nun erläutert werden, wie sich der Lagerbock 1 im Falle einer Frontal- oder Offsetkollision verhält. Erfolgt die Kollision mit einer gewissen Heftigkeit, so setzen sich die Verformungen des Fahrzeugvorbaus in die Spritzwand fort, die in den Fußraum des Fahrgastraumes hineingedrückt wird. Damit bewegen sich auch der Lagerbock 1 und das Pedal in den Fußraum hinein. In der hier dargestellten und beanspruchten Erfindung sorgt jedoch die Spreizeinrichtung dafür, daß die Ecken 24, 25 an den Gleitflächen 22, 23 des Keiles 20 entlanggleiten und damit nach außen gedrückt werden. Dabei schwenken die Längsstreben 3, 4 nach außen, wobei diese entweder an dem Übergang zum jeweiligen Flansch 10, 10' abknicken oder aber die Spritzwand entsprechend der neuen Ausrichtung der Längsstreben verformt wird. Dabei wird zumindest ein randoffener Schlitz 14, 14' von der Klemmschraube 15 gezogen. Gleichzeitig werden die Lagerhülsen 13, 13' aus der Pendelachse herausgezogen, die damit nach unten ausweichen kann und nun nicht mehr mit dem Lagerbock verschoben wird.

Bei dem Lenkungsquerträger 21 handelt es sich um ein stabiles Bauteil, an dem üblicherweise die Lenksäule befestigt wird. Aufgrund seiner Anordnung in der Karosserie wird er auch bei schweren Unfällen nicht relativ zum Fahrgastinnenraum verschoben und kann daher als Widerlager für den Lagerbock 1 dienen. Zur Realisierung der Erfindung ist es aber nicht zwingend notwendig, den Lenkungsquerträger unmittelbar als Widerlager zu nutzen. Vielmehr können auch z. B. Anbauten am Lenkungsquerträger sowie alle sonstigen Teile im vorderen Teil des Fahrgastinnenraums genutzt werden, die eine entsprechende Steifigkeit aufweisen, ausreichend fixiert sind und auch bei einer schweren Kollision nicht oder kaum verschoben werden.

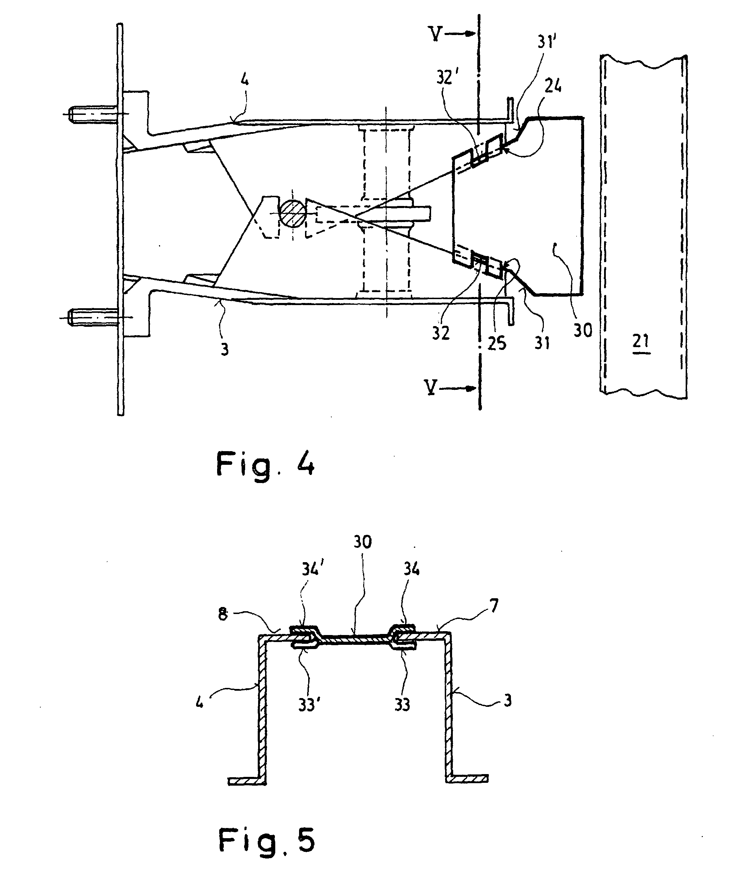

Die Figuren 4 und 5 zeigen eine alternative Ausführung des Keils, der hier als Flachkeil 30 ausgebildet ist. Die Figur 5 zeigt dabei einen Schnitt entlang der Linie V - V in der Figur 4. Der Keil besteht aus einem Blech mit einer Dicke, die etwa der Dicke der Blechteile entspricht, die für den Lagerbock verwendet werden. Im Unterschied zu der Ausführung nach Figur 1 und 2 ist der Flachkeil 30 nicht am Lenkungsquerträger 21 befestigt, sondern an den Längsstreben 3, 4 bzw. deren Lappen 7 und 8 gehalten und geführt. Dazu weisen die beiden angeschrägten Keilkanten jeweils zwei Abschnitte auf, wobei die ersten Abschnitte 31, 31' als Gleitkanten bezeichnet werden sollen, da sie den Gleitflächen 23, 24 der ersten Ausführungsform entsprechen. An diese Gleitkanten schließen sich zwei Abschnitte an, die als Führungskanten 32, 32' bezeichnet werden sollen. Diese Führungskanten 32, 32' verlaufen parallel zu den Kanten der langen Schenkel der Lappen 7, 8. Die Spitze bzw. die abgeschnittene Spitze des Dreiecks paßt sich in den Zwischenraum zwischen den Lappen 7, 8 ein. Aus den Führungskanten 31, 31' sind Laschen 33, 34, 33', 34' nach oben und unten ausgebogen, wobei die Lappen 7, 8 zwischen diesen Laschen eingeschoben sind. Die Laschen 33, 34, 33', 34' bilden somit eine Art Schiene für die Lappen. Da die Laschen leicht federnd nachgiebig ausgebildet sind, treten genügend große Klemmkräfte auf, um den Flachkeil 30 am Lagerbock 1 zu halten. Wird aber bei einer Kollision der Lagerbock 1 nach hinten gedrückt, so gleiten die Lappen in den von den Laschen 33, 34, 33', 34' gebildeten Schienen, so daß die Ecken 24, 25 an den Gleitkanten 31, 31' entlanggeführt werden und die beiden Längsstreben 3, 4, wie schon beschrieben, nach außen gedrückt werden. Im Unterschied zu der Ausführung nach Figur 1, 2 ist der Keil nicht am Lenkungsquerträger 21 befestigt, sondern wird erst mit der Verformung der Spritzwand und der Verschiebung des Lagerbockes gegen diesen gedrückt. Der Vorteil bei dieser Ausführung besteht darin, daß der Flachkeil mit dem Lagerbock montiert werden kann und eine Montageeinheit bildet. Außerdem befindet er sich stets in der richtigen Position, so daß Quertoleranzen zwischen dem Lenkungsquerträger und der Spritzwand unberücksichtigt bleiben können.

Die Gleitkanten 22, 23, 31, 31' können auch krummlinig geformt sein, um eine vordefinierte Kraft-Weg-Kennung zu erzielen.

In der Figur 6 wird eine weitere Spreizvorrichtung beschrieben, die nicht mit einem Keil arbeitet, sondern mit einem sogenannten Kniegelenkhebel 40, der aus einem ersten Hebel 41 und einem zweiten Hebel 42 besteht, die mittels eines Kniegelenks 43 gegeneinander verschwenkbar miteinander verbunden sind.

Die freien Enden der Hebel 41, 42 sind an Ohren 44, 45 angelenkt, die am hinteren Ende der Streben 3, 4 ähnlich wie die Lappen 7, 8 ausgebildet und von der jeweiligen Oberkante nach innen abgewinkelt sind.

Die beiden Lagerstellen 46, 46' werden durch eine Sicherungsbrücke miteinander verbunden, die mit randoffenen Schlitzen versehen und leicht klemmend an den Lagerstellen befestigt ist. Die Sicherungsbrücke 47 erfüllt die gleiche Aufgabe wie die Klemmschraube 15 in der Ausführungsform nach den Figuren 1 bis 4.

Der Kniegelenkhebel ist in der Grundposition angewinkelt, wobei die über das Kniegelenk verbundenen Enden der Hebel 41 und 42 über das Ende des Lagerbocks hinausragen und z. B. an den Lenkungsquerträger oder ein anderes Widerlager angelegt werden können. Im Fall eines Crashs, bei dem die Spritzwand 2 zum Widerlager hin verschoben wird, wird der Kniegenlenhebel auseinandergedrückt, wodurch der Kniehebelwinkel vergrößert wird und die Längsstreben 3, 4 nach außen gerückt werden. Wie schon zu Figur 2 beschrieben, wird dadurch die Lagerung der Pedalachse 5 aufgehoben.

## Patentansprüche

1. Anordnung zur Lagerung eines Pedals mittels eines Lagerbocks (1) in einem Kraftfahrzeug, der aus zwei Längsstreben (3, 4) mit je einer Lagerstelle (13, 13') für eine Pedalachse (5) besteht, die zwischen den Längsstreben (3, 4) drehbar gelagert angeordnet ist, wobei diese an ihren einen Enden jeweils einen Fußpunkt (10, 10') zur Befestigung an der Innenseite einer Spritzwand (2) des Fahrzeuges und an ihren anderen, freien Enden jeweils eine Abstützung (24, 25, 46, 47) gegenüber einem Widerlager (21) der Karosserie aufweisen, auf das sich die Spritzwand (2) im Falle einer Frontalkollision des Fahrzeuges zubewegt, wobei die Lagerstellen (13, 13') nach außen bewegt werden, **dadurch gekennzeichnet, daß** eine Spreizvorrichtung (20, 30, 40) vorgesehen ist, die zwischen den freien Enden der Längsstreben (3, 4) bzw. deren Abstützung (24, 25, 46, 47) und dem Widerlager (21) angeordnet ist und die im Falle einer Kollision die freien Enden der Längsstreben (3, 4) auseinanderdrückt.

2. Anordnung nach Anspruch 1, **dadurch gekennzeichnet, daß** die Spreizvorrichtung aus einem Keil (20, 30) besteht, der an dem Widerlager (21) der Karosserie abgestützt ist und zwei schräg zueinander verlaufende Gleitflächen (22, 23, 31, 31') aufweist, und daß jede Abstützung aus einem Abstützpunkt (24, 25) gebildet ist, der an die zugehörige Gleitfläche (22, 23, 31, 31') anlegbar ist.

3. Anordnung nach Anspruch 2, **dadurch gekennzeichnet, daß** der Keil (20) am Widerlager (21) befestigt ist.

4. Anordnung nach Anspruch 2, **dadurch gekennzeichnet, daß** der Keil (30) an mindestens einer der Längsstreben (3, 4) verschiebbar gehalten ist.

5. Anordnung nach einem der vorhergehenden Ansprüche, **dadurch gekennzeichnet, daß** jede Längsstrebe (3, 4) an ihrer oberen Längskante ein jeweils nach innen abgewinkelten Lappen (7, 8) aufweist und daß die Abstützungen an den Lappen (7, 8) ausgebildet sind.

6. Anordnung nach Anspruch 5, **dadurch gekennzeichnet, daß** die Lappen (7, 8) eine Dreiecksform aufweisen und an ihren dem Keil (20) zugewandten Enden jeweils eine Ecke aufweisen, die den Abstützpunkt (24, 25) bildet.

7. Anordnung nach einem der Ansprüche 4, 5 oder 6, **dadurch gekennzeichnet, daß** der Keil an einer innenliegenden Kante mindestens eines Lappens (7, 8) gehalten ist.

8. Anordnung nach Anspruch 7, **dadurch gekennzeichnet, daß** der Keil (30) flach ausgebildet ist und an den Führungskanten (32, 32'), die den innenliegenden Kanten der Laschen (7, 8) gegenüberliegen, nach oben und unten abgebogene Laschen (33, 34, 33', 34') aufweist, die seine Führung an den Lappen (7, 8) bilden.

9. Anordnung nach Anspruch 5, **dadurch gekennzeichnet, daß** die Lappen (7, 8) sich überdecken und im Überdeckungsbereich randoffene Schlitze (14, 14') aufweisen, die übereinander liegen und als Gegengewinde für eine Sicherungsschraube (15) dienen.

10. Anordnung nach Anspruch 1, **dadurch gekennzeichnet, daß** die Spreizvorrichtung aus einem vorzugsweise zweiteiligen Kniegelenkhebel (40) besteht, wobei die Enden der beiden Hebel (41, 42) an den Enden der Längsstreben (3, 4) angelenkt sind und im Bereich des Kniegelenks (43) an dem Widerlager (21) abstützbar sind.

11. Anordnung nach Anspruch 10, **dadurch gekennzeichnet, daß** die Kniehebelenden an nach innen gerichteten Ohren (44, 45) der Längsstreben (3, 4) angelenkt sind.

12. Anordnung nach Anspruch 11, **dadurch gekennzeichnet, daß** an den Anlenkpunkten (46, 47) eine Sicherungsbrücke (47) leicht lösbar befestigt ist.

## Claims

1. Assembly for mounting a pedal by means of a bearing block (1) in a motor vehicle, which consists of two longitudinal struts (3, 4) each with a bearing (13, 13') for a pedal shaft (5) which is mounted rotatably between the longitudinal struts (3, 4), wherein the latter at one end each have a base point (10, 10') for attachment to the inside of a splashboard (2) of the vehicle and at their other, free end each have a support (24, 25, 46, 47) opposite an abutment (21) of the body which the splashboard (2) moves up to in the event of a head-on collision of the vehicle, the bearings (13, 13') being moved outwards, **characterised in that** there is provided an expanding device (20, 30, 40) which is arranged between the free ends of the longitudinal struts (3, 4) or their support (24, 25, 46, 47) and the abutment (21) and which in the event of a collision forces apart the free ends of the longitudinal struts (3, 4).

2. Assembly according to claim 1, **characterised in that** the expanding device consists of a wedge (20, 30) which is supported on the abutment (21) of the body and comprises two sliding surfaces (22, 23, 31, 31') extending obliquely to each other, and **in that** each support is composed of a support point (24, 25) which can be applied to the associated sliding surface (22, 23, 31, 31').

3. Assembly according to claim 2, **characterised in that** the wedge (20) is attached to the abutment (21).

4. Assembly according to claim 2, **characterised in that** the wedge (30) is held slidably on at least one of the longitudinal struts (3, 4).

5. Assembly according to any of the preceding claims, **characterised in that** each longitudinal strut (3, 4) at its upper longitudinal edge comprises a tab (7, 8) bent inwards in each case and **in that** the supports are formed on the tabs (7, 8).

6. Assembly according to claim 5, **characterised in that** the tabs (7, 8) have a triangular shape and at their ends facing towards the wedge (20) each have a corner which forms the support point (24, 25).

7. Assembly according to any of claims 4, 5 or 6,
**characterised in that** the wedge is held on an inner edge of at least one tab (7, 8).

8. Assembly according to claim 7, **characterised in that** the wedge (30) is flat and comprises, at the guide edges (32, 32') which are opposite the inner edges of the tabs (7, 8), upwardly and downwardly bent straps (33, 34, 33', 34') which form its guide means on the tabs (7, 8).

9. Assembly according to claim 5, **characterised in that** the tabs (7, 8) overlap and in the overlap region comprise open-edged slots (14, 14') which lie one above the other and serve as a counter-thread for a locking screw (15).

10. Assembly according to claim 1, **characterised in that** the expanding device consists of a preferably two-part toggle lever (40), wherein the ends of the two levers (41, 42) are linked to the ends of the longitudinal struts (3, 4) and can be supported on the abutment (21) in the region of the toggle joint (43).

11. Assembly according to claim 10, **characterised in that** the toggle lever ends are linked to inwardly directed lugs (44, 45) of the longitudinal struts (3, 4).

12. Assembly according to claim 11, **characterised in that** a locking bridge (47) is attached to the linkage points (46, 47) so as to be easily releasable.

## Revendications

1. Agencement pour supporter, dans une véhicule automobile, une pédale, constitué de deux barres longitudinales (3, 4) portant chacune un point de palier (13, 13') pour un axe de pédale monté en rotation entre les barres (3, 4) dont chacune présente, à une de ses extrémités, un pied (10, 10') de fixation à la face interne du tableau d'auvent (7) du véhicule, tandis qu'à l'autre extrémité elle présente un point d'appui (24, 25, 46, 47) sur un contrepalier (21) porté par la carrosserie et en direction duquel le tableau d'auvent (2) se déplace en cas de collision frontale de sorte que les points de palier (13, 13') sont déplacés vers l'extérieur, **caractérisé en ce qu'**il est prévu entre les extrémités libres des barres longitudinales (3, 4) ou les points d'appui (24, 25, 46, 47) de celles-ci et le contrepalier (21), un dispositif écarteur (20, 30, 40) qui, dans le cas d'une collision frontale, écarte l'une de l'autre par poussée les deux extrémités libres des barres longitudinales (3, 4).

2. Agencement selon la revendication 1, **caractérisé en ce que** le dispositif écarteur est constitué par un coin (20, 30) qui s'appuie sur le contrepalier (21) de la carrosserie et présente deux portées de glissement (22, 23, 31, 31') obliques l'une par rapport à l'autre, chaque appui étant constitué par un point d'appui (24, 25) qui peut venir s'appliquer sur la portée correspondante (22, 23, 31, 31').

3. Agencement selon la revendication 2, **caractérisé en ce que** le coin (20) est fixé sur le contrepalier (21).

4. Agencement selon la revendication 2, **caractérisé en ce que** le coin (30) est monté coulissant sur au moins une des barres longitudinales (3, 4).

5. Agencement selon une des revendications précédentes, **caractérisé en ce que** chaque barre longitudinale (3, 4) présente sur son bord longitudinal supérieur une patte coudée (7, 8) sur laquelle se trouve l'appui correspndant.

6. Agencement selon la revendication 5, **caractérisé en ce que** les pattes (7, 8) ont chacune la forme d'un triangle dont l'extrémité située vers le coin (20) présente un angle qui constitue le point d'appui (24, 25).

7. Agencement selon une des revendications 4, 5, 6, **caractérisé en ce que** le coin est maintenu sur le bord interne d'au moins une patte (7, 8).

8. Agencement selon la revendication 7, **caractérisé en ce que** le coin (30) est plat et présente sur ses bords de guidage (32, 32') qui font face au bord interne des pattes (7, 8), des pattes recourbées vers le haut et vers le bas (33, 34, 33', 34') qui assurent son guidage le long des pattes (7, 8).

9. Agencement selon la revendication 5, **caractérisé en ce que** les pattes (7, 8) se recouvrent et présentent chacune dans la zone de recouvrement, des fentes (14, 14') ouvertes qui se superposent et servent de filetage d'accueil d'une vis de sécurité (15).

10. Agencement selon la revendication 1, **caractérisé en ce que** le dispositif écarteur est constitué avantageusement d'une articulation à genouillère (40) constituée de deux leviers (41, 42) articulés aux extrémités des bras longitudinaux (3, 4) et pouvant venir s'appuyer par la zone de leur genou (43) sur le contrepalier (21).

11. Agencement selon la revendication 10, **caractérisé en ce que** les extrémités des leviers montés en genouillère, sont articulées sur des oreilles (44, 45) portées par les barres longitudinale (3, 4) et dirigées vers l'intérieur.

12. Agencement selon la revendication 11, **caractérisé en ce qu'**un pont de sécurité (47) est fixé de manière facilement séparable sur les points d'articulation (46, 47).
